# EUROPÄISCHE PATENTSCHRIFT

(11) **EP 3 135 822 B1**
(45) Veröffentlichungstag und Bekanntmachung des Hinweises auf die Patenterteilung: **16.12.2020**
(21) Anmeldenummer: 16180895.1
(22) Anmeldetag: 22.07.2016
(51) Int. Cl.: E02F 3/18, E02F 3/20, E01C 23/088, E02F 5/08, E02F 9/24, E02F 9/26

(54) **SELBSTFAHRENDE BAUMASCHINE UND VERFAHREN ZUR ANZEIGE DER UMGEBUNG EINER SELBSTFAHRENDEN BAUMASCHINE**
SELF-PROPELLED CONSTRUCTION MACHINE AND METHOD FOR DISPLAYING THE AREA SURROUNDING SAME
ENGIN AUTOMOBILE ET PROCEDE D'AFFICHAGE DE L'ENVIRONNEMENT D'UN ENGIN AUTOMOBILE

(30) Priorität: 05.08.2015 DE 102015010011
(43) Veröffentlichungstag der Anmeldung: 01.03.2017
(73) Patentinhaber: Wirtgen GmbH, 53578 Windhagen (DE)
(72) Erfinder: Kröll, Harald, 53572 Unkel (DE); Lange, Herbert, 51491 Overath (DE); Lenz, Martin, 56276 Großmaischeid (DE); Barimani, Cyrus, 53639 Königswinter (DE); Hähn, Günter, 53639 Königswinter (DE)
(74) Vertreter: Oppermann, Frank

(56) Entgegenhaltungen:
- DE-U1-202007 005 756
- JP-A- 2010 241 548
- JP-A- 2013 253 402

## Beschreibung

Die Erfindung betrifft eine selbstfahrende Baumaschine mit einer sich in Arbeitsrichtung über den Maschinenrahmen hinaus erstreckenden Transporteinrichtung, insbesondere Straßenfräsmaschine oder Surface-Miner, die eine Bildanzeigeeinrichtung zur Anzeige eines Bildes der Umgebung der Baumaschine aufweist. Darüber hinaus betrifft die Erfindung ein Verfahren zur Anzeige eines Bildes der Umgebung einer selbstfahrenden Baumaschine.

Die bekannten Baumaschinen verfügen über einen Maschinenrahmen, der von einem Fahrwerk getragen wird, das vordere und hintere Laufwerke aufweist, und eine am Maschinenrahmen angeordnete Arbeitseinrichtung zum Abtragen des Bodens, beispielsweise zum Abtragen schadhafter Straßenschichten (Straßenfräsmaschine) oder Abbau von Bodenschätzen (Surface-Miner). Die Arbeitseinrichtung kann eine Fräs- und/oder Schneidwalze aufweisen. Den einzelnen Laufwerken der Baumaschine sind Hubeinrichtungen zugeordnet, die jeweils ein- bzw. ausgefahren werden können, so dass der Maschinenrahmen zusammen mit der Arbeitseinrichtung gegenüber der Bodenoberfläche abgesenkt bzw. angehoben oder die Neigung zur Bodenoberfläche verändert werden kann. Das abgetragene Material wird mit einer Transporteinrichtung zu einem Transportfahrzeug gefördert, das der Baumaschine vorausfährt oder folgt. Die Transporteinrichtung weist einen sich über den Maschinenrahmen hinaus erstreckenden Ausleger auf, der am Maschinenrahmen um eine senkrecht zu der Ebene des Maschinenrahmens verlaufende Achse schwenkbar angeordnet ist. Der Ausleger ist auch um eine parallel zu der Ebene des Maschinenrahmens und quer zu der Längsachse der Baumaschine verlaufende Achse schwenkbar. Folglich kann der Ausleger sowohl zu beiden Seiten geschwenkt als auch in der Höhe verstellt werden. Bei Frontlader-Baumaschinen erstreckt sich der Ausleger in Arbeitsrichtung weit über den Maschinenrahmen nach vorne und bei Hecklader-Baumaschinen nach hinten hinaus.

Für den Maschinenführer stellt sich das Problem, dass die Umgebung der Baumaschine vom Fahrstand aus nur beschränkt einsehbar ist. Bei Frontlader- und Hecklader-Baumaschinen kommt erschwerend hinzu, dass die Sicht des Maschinenführers durch die weit ausladende Transporteinrichtung nach vorne bzw. hinten beschränkt wird. Folglich kann der Maschinenführer einer Straßenfräsmaschine Objekte vom Fahrstand aus nicht erkennen, die in seinem Sichtbereich von der Transporteinrichtung verdeckt werden. In Abhängigkeit von der Position des Fahrers auf dem sich über die gesamte Breite der Maschine erstreckenden Fahrstand und dem großen Schwenkbereich der Transporteinrichtung können nicht nur unmittelbar unterhalb, sondern auch neben oder vor und hinter der Transporteinrichtung befindliche Objekte verdeckt sein.

Wegen der beschränkten Sicht sind Baumaschinen bekannt, die mit einer oder mehreren Kameras ausgestattet sind. Bekannte Straßenfräsmaschinen verfügen beispielsweise über eine Kamera, die ein Bild von einem rückwärtigen Bereich der Baumaschine aufnimmt, das auf einer am Fahrstand angeordneten Anzeigeeinheit angezeigt wird. Dadurch wird für den Maschinenführer das Zurücksetzen der Baumaschine erleichtert.

Aus der DE 20 2007 005 756 U1 ist eine selbstfahrende Baumaschine bekannt, die einen von einem Fahrwerk getragenen Maschinenrahmen aufweist, an dem eine sich über den Maschinenrahmen hinaus erstreckende Transporteinrichtung zum Fördern von abgetragenem Material befestigt ist. Die Baumaschine verfügt über ein Kamerasystem, das Kameras an den Längsseiten des Maschinenrahmens zur Überwachung der linken bzw. rechten Maschinenseite in Vorwärtsrichtung, eine Kamera am hinteren Ende des Maschinenrahmens zur Überwachung des rückwärtigen Bereichs und eine vom Maschinenrahmen weg gerichtete Kamera an der Transporteinrichtung zur Überwachung des Materialauswurfs umfasst.

Die DE 10 2013 002 079 A1 beschreibt einen Bagger, der über mehrere Überwachungskameras verfügt, die an unterschiedlichen Seiten des Maschinenrahmens in unterschiedlicher Höhe über der Bodenoberfläche angeordnet sind. Die einzelnen Kameras, die an dem Maschinenrahmen zur Justierung verschiebbar oder drehbar montiert sein können, nehmen Teilbilder der Umgebung auf, die mittels eines Bildverarbeitungssystems zu einem Gesamtbild eines bestimmten Bereichs der Umgebung zusammengefügt werden.

Die JP-A-2010241548 beschreibt einen Kran, der ein Fahrwerk aufweist, auf dem ein Maschinenrahmen drehbar gelagert ist, an dem ein Ausleger befestigt ist, der in vertikaler Richtung schwenkbar ist. Der Kran weist ein Kamerasystem mit mehreren Kameras auf, das an den Längsseiten und der Rückseite des Maschinenrahmens angeordnete Kameras, deren Blickrichtung von dem Maschinenrahmen weggerichtet sind, und eine schwenkbare Kamera an der Unterseite des Auslegers umfasst. Die an der Unterseite des Auslegers angeordnet Kamera soll den Bereich der Umgebung erfassen, der unterhalb der Lasten liegen, die mit dem Kran angehoben werden sollen, um in diesem Gefahrenbereich befindliche Personen erkennen zu können. Folglich ist die Blickrichtung auch dieser Kamera von dem Maschinenrahmen weggerichtet.

Für Kraftfahrzeuge, insbesondere Personenkraftfahrzeuge, sind Vorrichtungen bekannt, die den Fahrer beim Einparken des Fahrzeugs unterstützen. Derartige Vorrichtungen werden auch als Fahrerassistenzsysteme bezeichnet, die dem Fahrer des Kraftfahrzeuges ein lückenloses Bild der Fahrzeugumgebung aus einem virtuellen Sichtpunkt liefern, der oberhalb des Fahrzeugs liegt. Eine derartige Rundumansicht der Umgebung (surroundview) wird auch als eine Ansicht in der Vogelperspektive (bird-view) bezeichnet.

Die DE 10 2011 077 143 A1 beschreibt ein Fahrerassistenzsystem für Kraftfahrzeuge, das über eine Frontkamera im Kühlergrill, jeweils eine Seitenkamera in den beiden Außenspiegeln und eine Heckkamera am Fahrzeugheck im Bereich der Griffmulde des Kofferraumdeckels verfügt. Die Frontkamera nimmt einen vorderen Bildbereich und die Heckkamera einen hinteren Bildbereich auf, während die Seitenkameras seitliche Bildbereiche aufnehmen, die mit einem geeigneten Abbildungsmodell zu einem sich aus vier Bildausschnitten zusammensetzenden Gesamtbild transformiert werden. Eine lückenlose Abdeckung des gesamten Fahrzeugumfeldes soll dadurch erreicht werden, dass die Kameras mit einer Optik ausgestattet sind, die einen horizontalen Öffnungswinkel von mehr als 180° ermöglicht (fish-eye Optik), so dass sich die einzelnen Bildbereiche einander überlappen.

Die DE 10 2011 088 332 A1 beschreibt ein Verfahren zur Verbesserung der Objekterfassung bei Multikamerasystemen für Kraftfahrzeuge. Die Druckschrift befasst sich mit dem Problem der Erfassung von erhabenen Objekten in kritischen Bereichen eines Gesamtbildes in der Vogelperspektive. Das Verfahren sieht die Aufnahme von einem vorderen und hinteren und zwei seitlichen Sichtbereichen vor, die zu einem Gesamtbild in der Vogelperspektive zusammengefügt werden. Die für die Objekterfassung kritischen Bereiche sollen im Bereich der Nahtstellen (Stitching) liegen. Während bei den gängigen Systemen eine festimplementierte und nicht änderbare Nahstelle innerhalb des Überlappungsbereichs der Bilder definiert wird, sieht das bekannte Verfahren eine Verschiebung der Nahtstelle derart vor, dass die Nahstelle nicht im Bereich erhabener Objekte liegt. Dadurch soll vermieden werden, dass Objekte in dem für die Objekterfassung kritischen Bereich der Nahtstelle liegen.

Ein Verfahren zum Zusammenfügen mehrerer Bildaufnahmen zu einem Gesamtbild in der Vogelperspektive ist auch aus der DE 10 2006 003 538 B3 bekannt. Neben dem Einsatz in Personenkraftwagen soll sich das bekannte Verfahren auch für den Einsatz in Lastkraftwagen, Omnibussen oder Baufahrzeugen eigenen.

Die DE 2014 013 155 A1 beschreibt, ein Bildanzeigesystem für bewegliche Arbeitsmaschinen wie Lastwagen für den Erdtransport, Radlager oder Bagger, das die Erkennung von im eingeschränkten Sichtfeld des Fahrzeugführers befindlichen Objekten erlaubt. Das Bildanzeigesystem sieht auch eine Ansicht in der Vogelperspektive vor. Die Art der Darstellung ist von einem bestimmten Zustand der Arbeitsmaschine abhängig, der von Sensoren erfasst wird. Als Zustand der Arbeitsmaschine wird bei einer bevorzugten Ausführungsform die Bewegungsrichtung und Geschwindigkeit der Arbeitsmaschine erfasst, um die räumliche Beziehung zwischen Maschine und Objekt überwachen zu können. Beispielsweise soll ein Objekt nicht angezeigt werden, wenn sich dieses außerhalb des Bewegungsbereichs der Maschine befindet.

Obwohl sich im druckschriftlichen Stand der Technik vereinzelte Hinweise auf die Verwendung der bekannten Fahrerassistenzsysteme auch bei Baumaschinen finden lassen, werden die bekannten vorzugsweise für Personen- oder Lastkraftwagen bestimmten Fahrerassistenzsysteme aber den besonderen Anforderungen, die selbstfahrende Baumaschinen mit einer sich weit nach vorne hinaus erstreckenden Transporteinrichtung, insbesondere Straßenfräsmaschine oder Surface-Miner, an Fahrerassistenzsysteme stellen, im Allgemeinen nicht gerecht, da sich diese Baumaschinen von Kraftfahrzeugen insofern grundlegend voneinander unterscheiden, als ein Kraftfahrzeug weder über eine Arbeitseinrichtung zum Abtragen von Bodenmaterial noch über eine Transporteinrichtung verfügt.

Die bekannten Lösungen für Fahrerassistenzsysteme zur Anzeige eines Bildes der Umgebung eines Fahrzeugs in der Vogelperspektive machen ausschließlich von Kameras Gebrauch, deren Blickrichtung von dem Fahrzeug weg gerichtet ist bzw. von Kameras, deren Blickrichtungen voneinander weg gerichtet sind, d. h. die Systeme sehen keine Kameras vor, die einander zugewandt sind. So hat sich die Meinung festgefahren, die Verlängerungen der Achsen sämtlicher Kameras entgegen der Blickrichtung müssten sich in einem gemeinsamen Zentrum treffen. Die Fachleute waren der Ansicht, dass nicht der Maschinenrahmen, sondern die Umgebung des Fahrzeuges erfasst werden soll, um eine lückenlose Rundumsicht zu ermöglichen. Daher sind bei sämtlichen Fahrzeugen Kameras vorgesehen, die von dem Fahrzeug bzw. von einem gemeinsamen Zentrum wegweisen. Dies gilt auch für die Kameras, die an Anbauteilen des Fahrzeuges, beispielsweise an den Rückspiegeln eines Kraftfahrzeuges, angebracht sind.

Der Erfindung liegt die Aufgabe zugrunde, eine selbstfahrende Baumaschine mit einer sich in Längsrichtung der Baumaschine über den Maschinenrahmen nach vorne oder hinten hinaus erstreckenden Transporteinrichtung zum Fördern von abgetragenem Material, insbesondere eine Straßenfräsmaschine oder einen Surface-Miner, zu schaffen, die dem Maschinenführer einen hohen Bedienkomfort bietet. Darüber hinaus ist eine Aufgabe der Erfindung, ein Verfahren zur Verbesserung des Bedienkomforts anzugeben.

Die Lösung dieser Aufgaben erfolgt mit den Merkmalen der unabhängigen Patentansprüche. Die abhängigen Ansprüche betreffen vorteilhafte Ausführungsformen der Erfindung.

Die erfindungsgemäße Baumaschine verfügt über eine Bildanzeigeeinrichtung zur Anzeige eines Bildes der Umgebung der Baumaschine in der Vogelperspektive, die ein Kamerasystem mit mehreren Kameras zur Aufnahme von einzelnen sich überlappenden Bildbereichen der Baumaschinenumgebung aus unterschiedlichen Bildaufnahmepositionen und ein Bildverarbeitungssystem aufweist. Das Bildverarbeitungssystem ist derart ausgebildet, dass Bildausschnitte der einzelnen Bildbereiche zu einem Gesamtbild in der Vogelperspektive zusammengefügt werden.

Das Kamerasystem verfügt über mindestens eine Kamera, die derart an der Transporteinrichtung angeordnet ist, dass die Blickrichtung der Kamera im Wesentlichen in Richtung des Maschinenrahmens gerichtet ist, und mindestens eine weitere Kamera, die derart an dem Maschinenrahmen angeordnet ist, dass die Blickrichtung der Kamera im Wesentlichen von dem Maschinenrahmen weg gerichtet ist. Unter einer Kamera, die im Wesentlichen in Richtung des Maschinenrahmens gerichtet ist, wird also eine Kamera verstanden, deren Blickrichtung auf den Maschinenrahmen weist, während unter einer Kamera, die im Wesentlichen von dem Maschinenrahmen weg gerichtet ist, eine Kamera verstanden wird, deren Blickrichtung nicht auf den Maschinenrahmen weist.

Die in Richtung des Maschinenrahmens gerichtete Blickrichtung der mindestens einen an der Transporteinrichtung angeordneten Kamera erlaubt eine Anzeige eines Bildes des gesamten vorderen Bereichs der Baumaschine, was aufgrund der Abdeckung durch die Transporteinrichtung mit einer am Maschinenrahmen angeordneten Kamera, die von dem Maschinenrahmen weg gerichtet ist, nicht möglich wäre. Mit den in Richtung des Maschinenrahmens gerichteten und von dem Maschinenrahmen weg gerichteten Kameras erhält der Maschinenführer eine lückenlose Rundumsicht, die den von der Transporteinrichtung abgedeckten Bereich in Arbeitsrichtung vor oder hinter der Baumaschine einschließt.

Im Gegensatz zu den bekannten Systemen sieht die Erfindung mindestens eine Kamera vor, deren Blickrichtung nicht von dem Maschinenrahmen weg, sondern auf den Maschinenrahmen zu gerichtet ist. Daher geht die Erfindung bei der Lösung des Problems einer eingeschränkten Sicht bei Baumaschinen einen neuen Weg.

Bei einer bevorzugten Ausführungsform ist die mindestens eine Kamera derart an der Transporteinrichtung angeordnet, dass ein Teil des von der mindestens einen Kamera aufgenommenen Bildbereichs unterhalb des Maschinenrahmens liegt. Folglich erlaubt die mindestens eine Kamera mit der rückwärtigen Blickrichtung nicht nur eine den Abschnitt vor, sondern auch einen den Abschnitt unterhalb des Maschinenrahmens umfassende Rundumsicht. Bei einer Frontlader-Baumaschine liegt der Abschnitt unterhalb des Maschinenrahmens vorzugsweise im Bereich mindestens eines vorderen Laufwerks der Baumaschine, so dass der Maschinenführer auch erkennen kann, wie sich das Laufwerk auf ein Objekt zubewegt, das unmittelbar vor dem Laufwerk liegt. Bei einer Hecklader-Baumaschine ergeben sich analoge Verhältnisse.

Die Transporteinrichtung weist vorzugsweise einen Ausleger auf, an dem ein Förderband angeordnet ist, wobei die mindestens eine an der Transporteinrichtung angeordnete Kamera an der Unterseite des Auslegers angeordnet ist. Die mindestens eine Kamera kann grundsätzlich an einem Befestigungspunkt über die gesamte Länge des Auslegers angeordnet sein. Die Kamera sollte aber während des Verladevorgangs der Baumaschine oberhalb des Bodens, nicht aber oberhalb der Ladefläche des Transportfahrzeuges liegen. Die mindestens eine Kamera kann unter unterschiedlichen Blickwinkeln gegenüber dem Maschinenrahmen und somit gegenüber der Bodenoberfläche angeordnet sein. Von Vorteil ist, wenn die Kamera möglichst weit von der Frontseite der Baumaschine entfernt ist, so dass der von der Kamera aufgenommene Bildbereich möglichst groß ist. Dabei ist auch vorteilhaft, dass mit zunehmender Entfernung der Kamera von der Frontseite der Baumaschine die Höhe der Kamera gegenüber der Bodenoberfläche zunimmt, da die Transporteinrichtung in Arbeitsrichtung nach oben geneigt ist.

Eine Ausführungsform sieht vor, dass das Kamerasystem eine an der Unterseite des Auslegers der Transporteinrichtung angeordnete Kamera aufweist, wobei die Kameraachse in Längsrichtung des Auslegers verläuft, während eine alternative Ausführungsform zwei an der Unterseite des Auslegers angeordnete Kameras vorsieht, deren Kameraachsen schräg zur Längsrichtung des Auslegers verlaufen. Dabei ist die Blickrichtung der einen Kamera in Richtung der einen Seite des Maschinenrahmens und die Blickrichtung der anderen Kamera in Richtung der anderen Seite des Maschinenrahmens gerichtet, wenn der Ausleger nicht auf die eine oder andere Seite geschwenkt ist. Die Ausführungsform mit zwei Kameras hat den Vorteil, dass die Kameras einen kleineren Blickwinkel (Brennweite) haben können, um den gleichen Bildbereich aufnehmen zu können bzw. mit dem gleichen Blickwinkel (Brennweite) ein größerer Bildbereich aufgenommen werden kann.

Für eine lückenlose Rundumsicht ist im Allgemeinen ausreichend, wenn das Kamerasystem zur Aufnahme eines linken und rechten Bildbereichs eine linke Kamera an der in Arbeitsrichtung linken Längsseite des Maschinenrahmens und eine rechte Kamera an der in Arbeitsrichtung rechten Längsseite des Maschinenrahmens und zur Aufnahme eines hinteren Bildbereichs eine in Arbeitsrichtung hintere Kamera aufweist. An den Längsseiten und/oder der Rückseite der Baumaschine können aber auch mehrerer Kameras vorgesehen sein.

Bei einer besonders bevorzugten Ausführungsform sind die linke Kamera und die rechte Kamera und die mindestens eine an der Transporteinrichtung angeordnete Kamera derart an dem Maschinenrahmen und der Transporteinrichtung angeordnet, dass sich der Bildbereich der rechten Kamera und der Bildbereich der linken Kamera mit dem mindestens einen Bildbereich der mindestens einen an der Transporteinrichtung angeordneten Kamera in einem Bereich auf der linken und rechten Längsseite des Maschinenrahmens überlappen. Vorzugsweise überlappen sich auch die Bildbereiche der linken und rechten Kamera mit dem Bildbereich der rückwärtigen Kamera.

Das Bildverarbeitungssystem ist vorzugsweise derart konfiguriert, dass in dem Bildbereich der linken Kamera, dem Bildbereich der rechten Kamera und dem Bildbereich der mindestens einen an der Transporteinrichtung angeordneten Kamera Bildausschnitte festgelegt werden, die zu einem Gesamtbild in der Vogelperspektive zusammengefügt werden, das einen auf der linken und rechten Längsseite des Maschinenrahmens liegenden Abschnitt, einen unterhalb des Maschinenrahmens liegenden Abschnitt und einen vor dem Maschinenrahmen liegenden Abschnitt umfasst. Damit ist für den Maschinenführer eine lückenlose Rundumsicht gegeben.

Zur Ausrichtung der Transporteinrichtung auf die Ladefläche des Transportfahrzeugs ist die Transporteinrichtung einer Baumaschine an dem Maschinenrahmen im Allgemeinen um eine senkrecht auf der Ebene des Maschinenrahmens verlaufende Achse schwenkbar angeordnet. Wenn die Transporteinrichtung auf die eine oder andere Seite geschwenkt wird, ändert sich der von der mindestens einen an der Transporteinrichtung angeordneten Kamera aufgenommene Bildbereich.

Eine weitere besonders bevorzugte Ausführungsform weist daher eine die Schwenkstellung der Transporteinrichtung erfassende Lageerfassungs-Einrichtung auf, wobei das Bildverarbeitungssystem derart konfiguriert ist, dass der Verlauf der Nähte zwischen den Bildausschnitten in Abhängigkeit von der Schwenkstellung der Transporteinrichtung festgelegt wird.

Die Festlegung des Verlaufs der Nähte in Abhängigkeit von der Schwenkstellung der Transporteinrichtung erlaubt ein relativ einfaches Zusammenfügen der einzelnen Bilder mit einem verhältnismäßig geringen Rechenaufwand, so dass die für die Anzeige des Gesamtbildes erforderlichen Bilddaten in Echtzeit generiert werden können.
Die Lageerfassungs-Einrichtung ist vorzugsweise derart konfiguriert, dass die Schwenkstellung beschreibende Positions-Daten erzeugt werden. Dabei ist unerheblich, wie die Positions-Daten ermittelt werden. Die Schwenkstellung kann beispielsweise mit Winkelgebern, Abstandssensoren oder dergleichen erfasst werden.

Bei einer Schwenkbewegung der Transporteinrichtung verändert sich der von der Kamera erfasste Bildbereich, wobei sich die Umrisslinie des Bildbereichs verschiebt. In Abhängigkeit von der Schwenkstellung der Transporteinrichtung ergeben sich unterschiedliche Überlappungsbereiche. Die räumliche Lage und Ausdehnung der Überlappungsbereiche bestimmt die Abmessungen der auszuwählenden Bildausschnitte, die zu dem Gesamtbild in der Vogelperspektive zusammengefügt werden. Dadurch wird auch der Verlauf der Nähte zwischen den Bildausschnitten bestimmt.

Das Bildverarbeitungssystem ist vorzugsweise derart konfiguriert, dass auf der Basis der Positions-Daten der Verlauf der Nähte zwischen den Bildausschnitten derart festgelegt wird, dass die Nähte innerhalb der Überlappungsbereiche des linken und rechten Bildbereichs mit dem vorderen Bildbereich und innerhalb der Überlappungsbereiche des linken und rechten Bildbereichs mit dem hinteren Bildbereich liegen. Dadurch können Objekte im Bereich der Nahtstellen, die aufgrund von Abbildungsfehlern möglicherweise doppelt oder überhaupt nicht wiedergegeben werden, besser erfasst werden.

In diesem Zusammenhang wird unter dem Verlauf der Naht die räumliche Anordnung der Naht, d. h. die Linie verstanden, entlang der die Naht verläuft. Die Festlegung des Verlaufs der Nähte kann mit den bekannten Algorithmen erfolgen, die eine Verschiebung der Nahtlinie in Abhängigkeit von der Schwenkstellung der Transporteinrichtung berechnet.

Die Transporteinrichtung ist im Allgemeinen auch um eine parallel zu der Ebene des Maschinenrahmens und quer zu der Längsachse der Baumaschine verlaufende Achse schwenkbar an dem Maschinenrahmen angeordnet. Dadurch kann die Transporteinrichtung auch in der Höhe verstellt werden. Mit einer Höhenverstellung der Transporteinrichtung ändert sich auch der Blickwinkel der mindestens einen Kamera an der Transporteinrichtung, wodurch sich die Umrisslinie des aufgenommenen Bildbereichs verschiebt. Die Lageerfassungs-Einrichtung kann derart konfiguriert sein, dass nicht nur die Schwenkstellung, sondern auch den Anstellwinkel der Transporteinrichtung gegenüber der Ebene des Maschinenrahmens beschreibende Positions-Daten erzeugt werden, wobei das Bildverarbeitungssystem derart konfiguriert ist, dass der Verlauf der Nähte zwischen den Bildausschnitten auch in Abhängigkeit von dem Anstellwinkel der Transporteinrichtung festgelegt wird.

Eine Schrägstellung der Kameraachsen zur Bodenoberfläche führt zwangsläufig zu Verzerrungen bei der Darstellung des Kamerabildes in der rechteckförmigen Bildebene. Diese Verzerrungen können aber mit den bekannten Verfahren der Bildverarbeitung zumindest teilweise ausgeglichen werden.

Im Folgenden werden Ausführungsbeispiele der Erfindung unter Bezugnahme auf die Figuren im Einzelnen erläutert.

Es zeigen:
Fig. 1 ein Ausführungsbeispiel einer selbstfahrenden Baumaschine in der Seitenansicht,
Fig. 2 die Baumaschine von Fig. 1 in der Draufsicht,
Fig. 3 die für die Erfindung wesentlichen Komponenten der Bildanzeigeeinrichtung der erfindungsgemäßen Baumaschine in vereinfachter schematischer Darstellung,
Fig. 4 eine Ausführungsform der Baumaschine mit einer an der Transporteinrichtung angeordneten Kamera, deren Kameraachse in Längsrichtung der Transporteinrichtung verläuft, wobei die Längsachse der Transporteinrichtung auf der Längsachse des Maschinenrahmens liegt,
Fig. 5 die Baumaschine von Fig. 4, wobei die Transporteinrichtung zu einer Seite des Maschinenrahmens geschwenkt ist,
Fig. 6 der Blickwinkel einer an dem Maschinenrahmen angeordneten Kamera,
Fig. 7 der Blickwinkel einer an der Transporteinrichtung angeordneten Kamera,
Fig. 8 eine Ausführungsform der Baumaschine mit zwei an der Transporteinrichtung angeordneten Kameras, deren Kameraaschen schräg zu der Längsachse der Transporteinrichtung, wobei die Längsachse der Transporteinrichtung auf der Längsachse des Maschinenrahmens liegt, und
Fig. 9 die Baumaschine von Fig.8, wobei die Transporteinrichtung zu einer Seite des Maschinenrahmens geschwenkt ist.

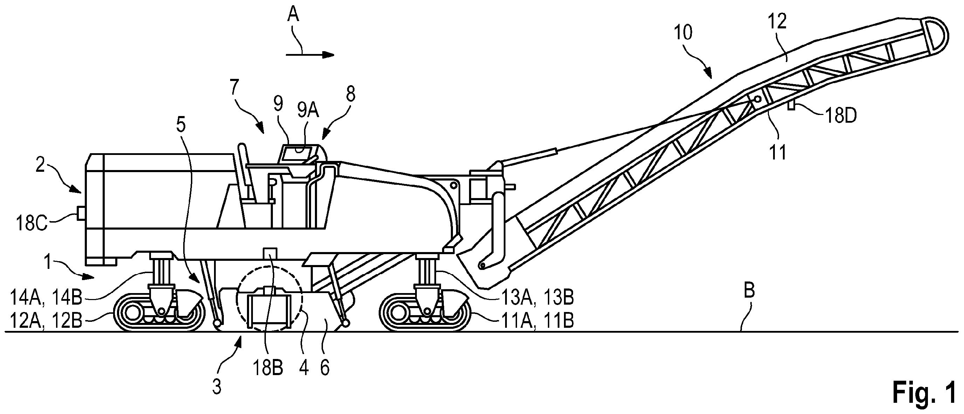

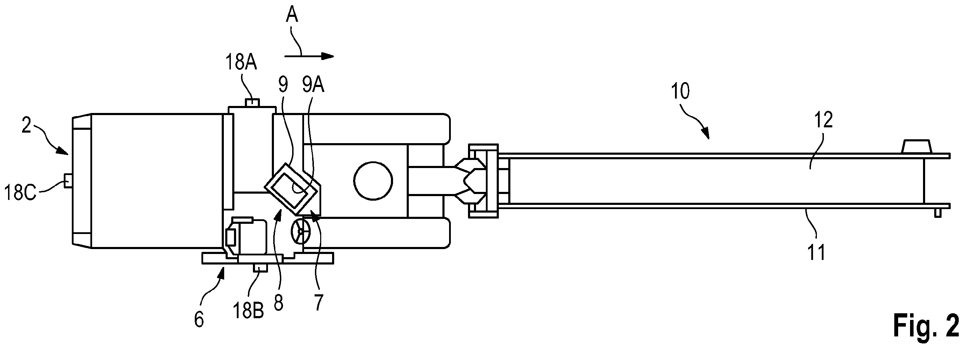

Die Figuren 1 und 2 zeigen in der Seiten- und Draufsicht als Beispiel für eine selbstfahrende Baumaschine eine Straßenfräsmaschine zum Abfräsen von Straßenbelägen, bei der es um eine Frontlader-Straßenfräsmaschine handelt. Bei der Straßenfräsmaschine kann es sich aber auch um eine Hecklader-Straßenfräsmaschine handeln.

Die Baumaschine verfügt über einen von einem Fahrwerk 1 getragenen Maschinenrahmen 2, an dem eine Arbeitseinrichtung 3 angeordnet ist. Die Arbeitseinrichtung 3 weist eine Arbeitswalze auf, bei der es sich um eine Fräswalze handelt. Die in Fig. 1 nur andeutungsweise dargestellte Fräswalze 4 ist in einem Fräswalzengehäuse 5 angeordnet. An der in Arbeitsrichtung A linken und rechten Seite ist das Fräswalzengehäuse 5 von einem Kantenschutz 6 verschlossen. An der in Arbeitsrichtung A vorderen Seite ist das Fräswalzengehäuse 5 von einem Niederhalter und an der hinteren Seite von einem Abstreifer verschlossen, die in Fig. 1 nicht erkennbar sind. Oberhalb des Fräswalzengehäuses 5 befindet sich am Maschinenrahmen der Fahrstand 7 mit einem Bedienpult 8 für den Maschinenführer. Am Bedienpult 8 befindet sich eine Anzeigeeinheit 9 mit einem Display 9A. Das abgefräste Fräsgut wird mit einer sich in Arbeitsrichtung A über den Maschinenrahmen 2 weit nach vorne hinaus erstreckenden Transporteinrichtung 10 abgeführt. Die Transporteinrichtung 10 weist einen langestreckten Ausleger 11 auf, der um eine senkrecht auf der Ebene des Maschinenrahmens verlaufende Achse zu beiden Seiten schwenkbar an dem Maschinenrahmen 2 in Arbeitsrichtung vor dem Fahrstand 7 befestigt ist. Darüber hinaus ist der Ausleger 11 um eine parallel zu der Ebene des Maschinenrahmens 2 verlaufende Achse schwenkbar, so dass der Ausleger auf- und abbewegbar ist. An der Oberseite der Transporteinrichtung 10 befindet sich ein Förderband 12 zum Fördern des abgefrästen Materials.

Die Baumaschine weist in Arbeitsrichtung A ein vorderes linkes Laufwerk 11A und ein vorderes rechtes Laufwerk 11B und ein hinteres linkes Laufwerk 12A und ein hinteres rechtes Laufwerk 12B auf, denen eine in Arbeitsrichtung A vordere, linke und rechte Hubeinrichtung 13 A,B und eine hintere, linke und rechte Hubeinrichtung 14 A,B zugeordnet sind, so dass durch Einfahren bzw. Ausfahren der Hubeinrichtungen die Höhe und Neigung des Maschinenrahmens 2 gegenüber der Bodenoberfläche B verändert werden kann. Die Laufwerke der Baumaschine können sowohl Kettenlaufwerke als auch Räder sein.

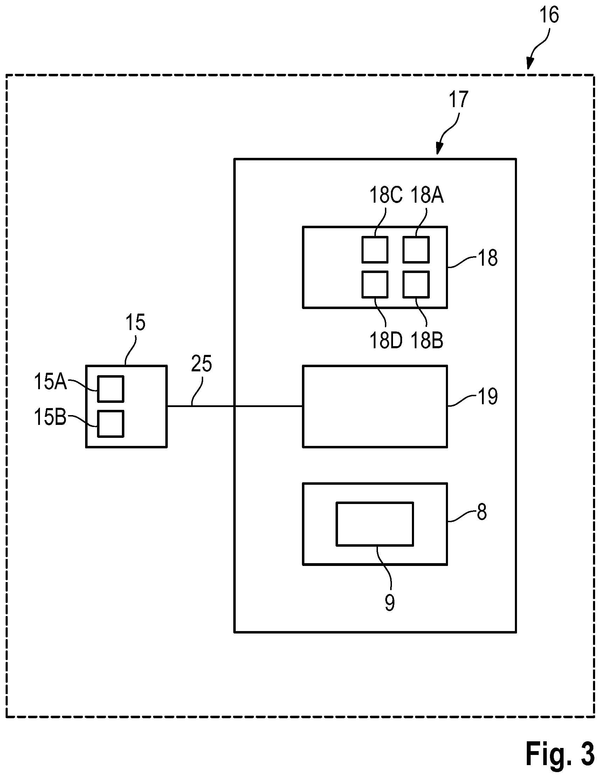

Fig. 3 zeigt die für die Erfindung wesentlichen Komponenten der erfindungsgemäßen Baumaschine in vereinfachter schematischer Darstellung. Die Baumaschine weist eine Lageerfassungs-Einrichtung 15 zur Erfassung der Schwenkstellung der Transporteinrichtung 10 in der horizontalen Ebene auf, die Bestandteil einer zentralen Steuer- und Recheneinheit 16 der Baumaschine sein kann. Die horizontale Schwenkstellung der Transporteinrichtung 10 kann mit geeigneten Sensoren, z. B. Winkelgebern, Abstandsensoren etc., erfasst werden oder aus Daten ermittelt werden, die aus den nicht dargestellten Antriebsmitteln zum Schwenken der Transporteinrichtung, z. B. der Hubstellung von Kolben/Zylinder-Anordnungen gewonnen werden.

Die Lageerfassungs-Einrichtung 15 weist eine die Daten des Sensors 15A empfangende Recheneinheit 15B auf, die derart konfiguriert, dass aus den Daten beispielsweise des Winkelgebers 15A der Winkel in der horizontalen Ebene zwischen der Längsachse der Transporteinrichtung 10 und der Längsachse des Maschinenrahmens 2 bestimmt wird (Schwenkstellung). Die Lageerfassungs-Einrichtung 15 kann auch den Winkel in der vertikalen Ebene zwischen der Längsachse der Transporteinrichtung 10 und der Längsachse des Maschinenrahmens 2 erfassen (Höhe).

Darüber hinaus verfügt die Baumaschine über eine Bildanzeigeeinrichtung 17 zur Anzeige eines Bildes der Umgebung der Baumaschine in der Vogelperspektive, die ein Kamerasystem 18 und ein Bildverarbeitungssystem 19 aufweist. Die Anzeige des Bildes erfolgt auf dem Display 9A der Anzeigeeinheit 9 am Fahrstand 7 im Sichtfeld des Maschinenführers.

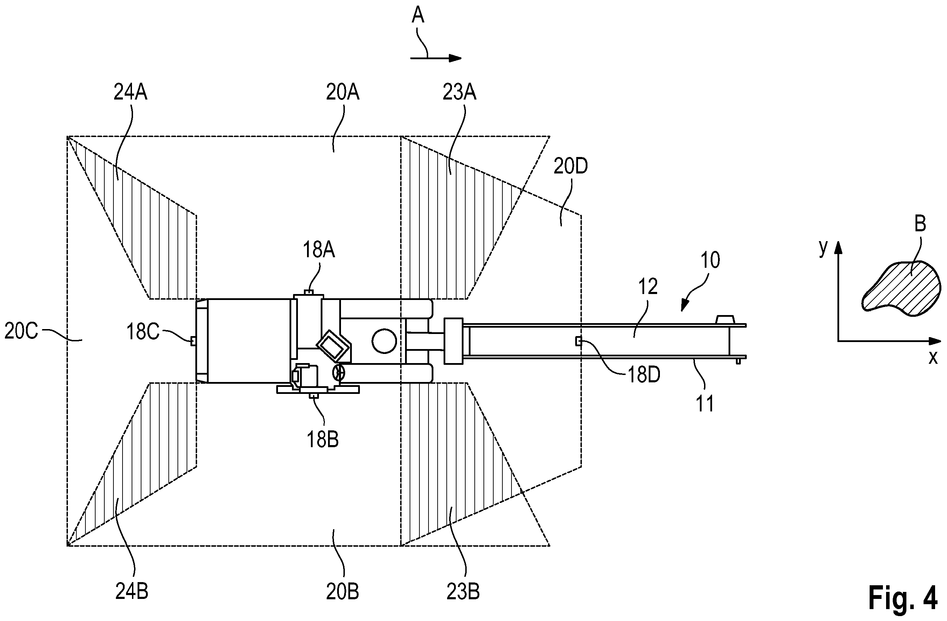

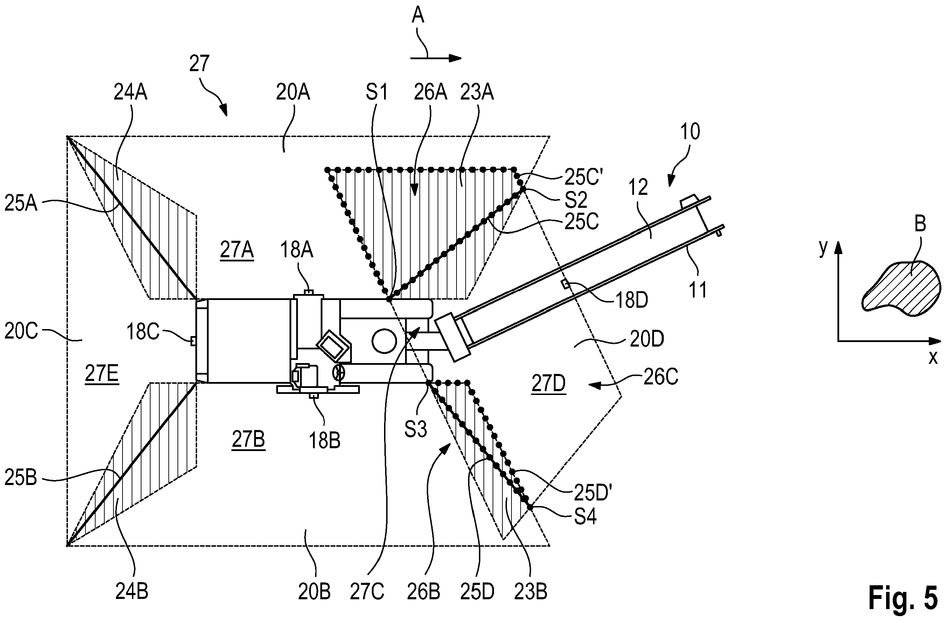

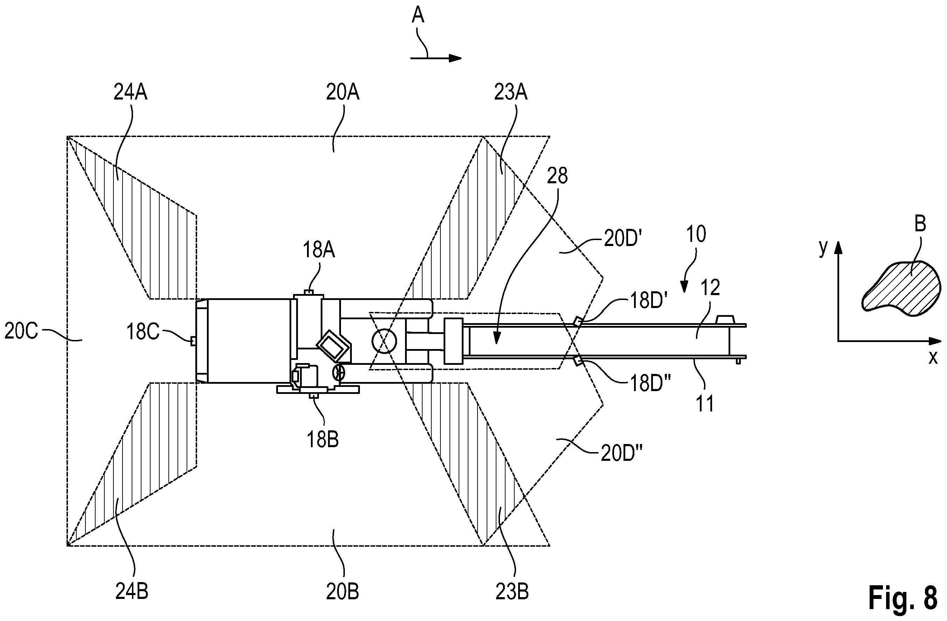

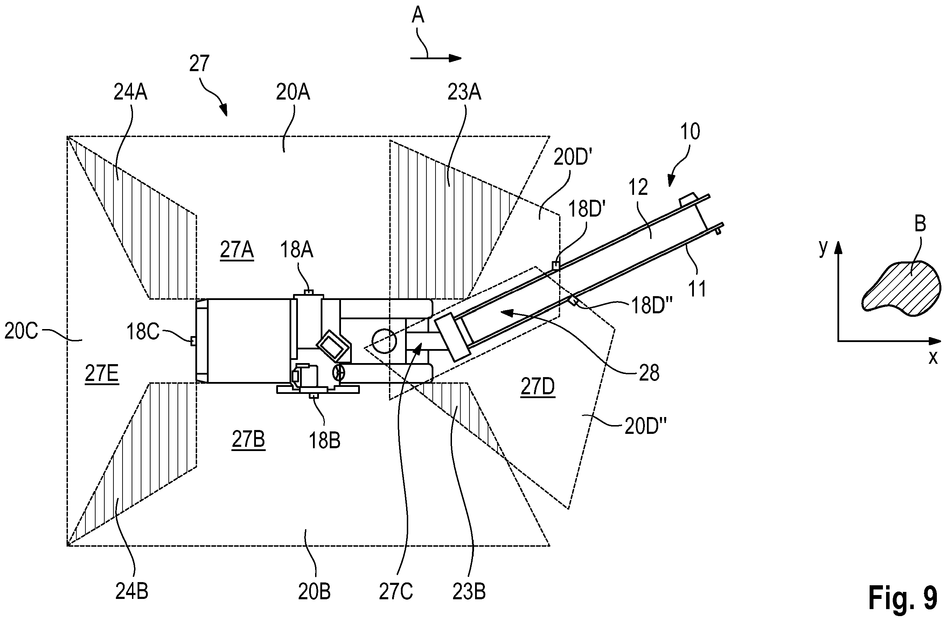

Nachfolgend werden Aufbau und Funktion der Bildanzeigeeinrichtung 17 im Einzelnen beschrieben. Die Figuren 4 und 5 zeigen ein erstes Ausführungsbeispiel und die Figuren 8 und 9 ein zweites Ausführungsbeispiel der Baumaschine, die sich nur in der Anzahl der Kameras des Kamerasystems voneinander unterscheiden.

Die Bildanzeigeeinrichtung 17 der Baumaschine verfügt über ein Kamerasystem 18 mit mehreren Kamers 18A, 18B, 18C, 18D bei dem ersten Ausführungsbeispiel bzw. 18A, 18B, 18C, 18D', 18D" bei dem zweiten Ausführungsbeispiel zur Aufnahme von einzelnen Bildbereichen der Umgebung der Baumaschine aus unterschiedlichen Bildaufnahmepositionen. Die Kameras nehmen jeweils einen bestimmten Bildbereich der Bodenoberfläche B auf. Die Lage und Größe des von der Kamera aufgenommen Bildbereiches ist von der Anordnung und Ausrichtung der Kamera und der Kameraoptik, insbesondere der Brennweite des Objektives der Kamera, abhängig. Die Kameras sind derart angeordnet und ausgebildet, dass sich die von den Kameras aufgenommen Bildbereiche überlappen.

Bei dem vorliegenden Ausführungsbeispielen befinden sich vorzugsweise mittig zwischen den linken, vorderen und hinteren Eckbereichen des Maschinenrahmens 2 eine seitliche linke Kamera 18A und vorzugsweise mittig zwischen den rechten, vorderen und hinteren Eckbereichen des Maschinenrahmens 2 eine seitliche rechte Kamera 18B und vorzugsweise mittig zwischen den hinteren Eckbereichen des Maschinenrahmens eine hintere Kamera 18C. An den vorderen Eckbereichen des Maschinenrahmens befinden sich keine Kameras.

Es wird angenommen, dass jede Kamera 18 A, B, C einen im Wesentlichen rechteckförmigen Bildausschnitt der Bodenoberfläche B aufnehmen würde, wenn die Blickrichtung der Kamera (Kameraachse) orthogonal auf der Bodenoberfläche stünde. Aufgrund des Anstellwinkels wird von der Kamera aber ein trapezförmiger Bildbereich der Bodenoberfläche aufgenommen, d. h. der außerhalb des trapezförmigen Bereichs liegende Bereich des Geländes wird von der Kamera nicht erfasst.

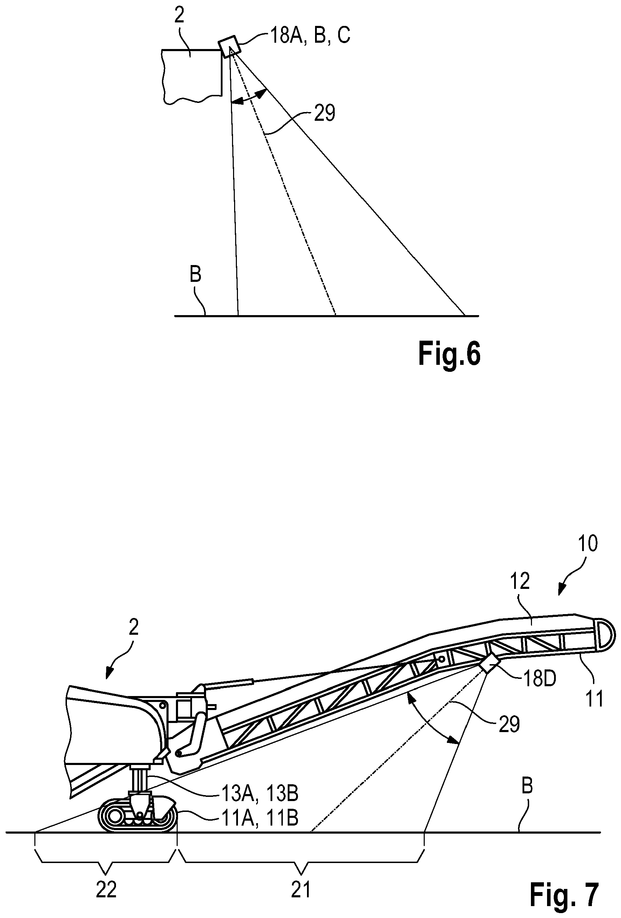

Die Kameras 18 A, B, C an dem Maschinenrahmen 2 sind derart angeordnet, dass die Blickrichtungen 29 der Kameras von dem Maschinenrahmen 2 weg gerichtet sind. Die Kameraachsen 29 (Blickrichtungen) der seitlichen Kameras 18A und 18B und der hinteren Kamera 18C stehen vorzugsweise orthogonal zu den Längsseiten bzw. der Schmalseite des Maschinenrahmens 2, wobei die seitlichen Kameras 18A,B einen trapezförmigen, seitlichen Bildbereich 20A, 20B und die hintere Kamera 18C einen trapezförmigen, hinteren Bildbereich 20C aufnehmen. Die Kameraachsen 29 können aber auch nach vorne oder hinten gerichtet sein, um einen größeren vorderen bzw. hinteren Geländebereich zu erfassen. Dann können die Bildbereiche bei einer parallelen Ausrichtung des Maschinenrahmens zur Bodenoberfläche B aber nicht durch gleichschenklige Trapeze beschrieben werden. Fig. 6 zeigt die Blickrichtung (Kameraachse 29) einer Kamera 18 A, B, C an dem Maschinenrahmen 2, die von dem Maschinenrahmen 2 weg gerichtet ist.

Anstelle von zwei Kameras an den vorderen Eckbereichen des Maschinenrahmens weist das Kamerasystem 18 des ersten Ausführungsbeispiels eine vordere Kamera 18D auf, die an der Unterseite des Auslegers 11 der Transporteinrichtung 10 angeordnet ist. Die Kamera 18D ist an einem Punkt auf der Längsachse des Auslegers 11 befestigt, der in einem Bereich des mittleren Drittels zwischen den beiden Enden des Auslegers liegt. Der Befestigungspunkt kann aber auch im Bereich des vorderen oder hinteren Drittels des Auslegers liegen. Allerdings sollte der Befestigungspunkt nicht im Bereich des freien Endes des Auslegers liegen, da sich das freie Ende des Auslegers während des Betriebs der Baumaschine zeitweise über der Ladefläche des Transportfahrzeugs befindet. Bei einer Befestigung der Kamera am freien Ende des Auslegers ist aber nur während des Verladevorgangs mit einer zeitweise eingeschränkten Sicht zu rechnen, nicht aber während des Umsetzens der Baumaschine.

Die vordere Kamera 18D ist derart an der Unterseite der Transporteinrichtung 10 angeordnet, dass die Kameraachse auf der Längsachse der Transporteinrichtung liegt und dass die Blickrichtung der Kamera in Richtung des Maschinenrahmens 2 gerichtet ist. Die vordere Kamera 18D ist daher eine rückwärts blickende Kamera. Fig. 7 zeigt die Blickrichtung (Kameraachse 29) der Kamera 18D an der Transporteinrichtung 10, die in Richtung des Maschinenrahmens 2 gerichtet ist.

Der Winkel zwischen der Kameraachse 29 der vorderen Kamera 18D und der Ebene des Maschinenrahmens 2ist vorzugsweise derart bemessen, dass die Kamera einen in Arbeitsrichtung vorderen Bildbereich aufnimmt, der sich bis in einen Abschnitt unterhalb des Maschinenrahmens 2 erstreckt (Fig. 7). Die vordere Kamera 18D nimmt somit einen Geländeabschnitt 21 auf, der aus einer Ansicht in der Vogelperspektive lückenlos erfasst werden könnte, wenn dieser Bereich nicht von der Transporteinrichtung 10 abgedeckt wäre, und einen Abschnitt 22 der aus der Ansicht von einem oberhalb des Maschinenrahmens 2 liegenden Betrachtungspunkt nicht erfasst werden kann. Da die Transporteinrichtung 10 in der Höhe verstellbar ist, ändert sich auch der Winkel zwischen Kameraachse 29 und der Ebene des Maschinenrahmens 2. Der Anstellwinkel der vorderen Kamera 18D ist daher so bemessen, dass sich in einer vorgegebenen Position der Transporteinrichtung 10, die der üblichen Betriebsstellung entspricht, die beiden Bildabschnitte 21, 22 die gewünschten Flächen einschließen (Fig. 7).

Fig. 4 zeigt die Baumaschine, wobei die Längsachse der Transporteinrichtung 10 auf der Längsachse des Maschinenrahmens 2 liegt, während Fig. 5 die Baumaschine zeigt, wobei die Transporteinrichtung 10 in die Betriebsstellung beispielsweise auf die linke Seite geschwenkt ist. Die Figuren 4 und 5 zeigen, dass sich mit der Schwenkstellung der Transporteinrichtung auch die Lage des von der vorderen Kamera 18D aufgenommenen Bildbereichs 20D verändert.

Der Bildbereich 20D der vorderen Kamera 18D überlappt sich mit dem Bildbereich 20A der seitlichen, linken Kamera 18A und dem Bildbereich 20B der seitlichen, rechten Kamera 18B, und der Bildbereich 20A der linken Kamera 18A und der Bildbereich 20B der rechten Kamera 18B überlappt sich mit dem Bildbereich 20C der hinteren Kamera 18C. Es ergeben sich ein vorderer, linker Überlappungsbereich 23A der Bildbereiche 20A, 20D der linken Kamera 18A und der vorderen Kamera 18D und ein vorderer rechter Überlappungsbereich 23B der Bildbereiche 20B, 20D der rechten Kamera 18D und der vorderen Kamera 18D. Des Weiteren ergeben sich ein hinterer linker Überlappungsbereich 24A der Bildbereiche 20A, 20C der linken Kamera 18A und der hinteren Kamera 18C und ein hinterer rechter Überlappungsbereich 24B der Bildbereiche 20B, 20C der rechten Kamera 18B und der hinteren Kamera 18C.

Das Bildverarbeitungssystem 19 ist vorzugsweise eine Datenverarbeitungseinheit (CPU), auf der ein Datenverarbeitungsprogramm (Software) läuft. Die Lageerfassungs-Einrichtung 15 ist mit dem Bildverarbeitungssystem 19 über eine Datenleitung 25 verbunden, so dass das Bildverarbeitungssystem 19 die Positions-Daten der Lageerfassungs-Einrichtung empfangen kann.

Zur Vereinfachung wird angenommen, dass sich der Maschinenrahmen 2 in einer zu der Oberfläche des Bodens parallelen Ausrichtung befindet bzw. die Neigung des Maschinenrahmens gegenüber der Geländeoberfläche zu vernachlässigen ist.

Das Bildverarbeitungssystem 19 bestimmt in Abhängigkeit von der Schwenkstellung der Transporteinrichtung 10 die Lage der in gepunkteten Linien dargestellten Umrisslinien des Bildbereichs 20D der vorderen Kamera 18D, dessen Lage sich bei einer Schwenkbewegung der Transporteinrichtung ändert. Darüber hinaus bestimmt das Bildverarbeitungssystem 19 die Lage der in gepunkteten Linien dargestellten Umrisslinien der Bildbereiche 20A, 20B, 20C der linken und rechten Kamera 18A, 18B und der hinteren Kamera 18C. Die Lage der geraden Umrisslinien kann in einem kartesischen X/Y-Koordinatensystem, das auf der Oberfläche des Bodens B liegt, durch deren Anfangs- und Endpunkte beschrieben werden. Die Koordinaten dieser Punkte werden in dem Bildverarbeitungssystem 19 nach einem Algorithmus berechnet, der die Schwenkstellung der Transporteinrichtung berücksichtigt.

Nachdem die Lage der Bildbereiche 20 A,B,C,D bekannt ist, die durch die Koordinaten der Anfangs- und Endpunkte der Umrisslinien beschrieben werden, bestimmt das Bildverarbeitungssystem 19 die Lage der Überlappungsbereiche 23A, 23B, 24A, 24B der einander angrenzenden Bildbereiche 20A,B,C,D. Die Überlappungsbereiche 23A, 23B, 24A, 24B können beispielsweise durch Berechnung einer Schnittmenge benachbarter Bildbereiche 20A,B,C,D bestimmt werden.

Das Bildverarbeitungssystem 19 ist derart konfiguriert, dass in den einzelnen Bildbereichen 20A, 20B, 20C, 20D Bildausschnitte festgelegt werden, d. h. passende Ausschnitte aus den aufgenommenen Bildbereichen 20A,B,C,D der Bodenoberfläche B, die sich zu einem Gesamtbild 27 in der Vogelperspektive lückenlos zusammenfügen lassen. Beim Zusammenfügen der Bildausschnitte ergeben sich Nähte (Stitching), d. h. Grenzlinien zwischen den Bildausschnitten bzw. Schnittlinien der Bildbereiche. Der Verlauf der Nähte ist von der Lage der sich überlappenden trapezförmigen Bildausschnitte abhängig.

Das Bildverarbeitungssystem bestimmt in dem X/Y-Koordinatensystem die Koordinaten der Anfangs- und Endpunkte der Umrisslinien des vorderen linken Überlappungsbereichs 23A, des vorderen rechten Überlappungsbereichs 23B, des hinteren linken Überlappungsbereichs 24A und des hinteren rechten Überlappungsbereichs 24B. Die Überlappungsbereiche sind in den Figuren 4 und 5 durch Schraffuren dargestellt. Daraufhin legt das Bildverarbeitungssystem 19 den Verlauf der Nähte (Stitching) fest, wobei folgende Kriterien Berücksichtigung finden.

Der Verlauf der in Arbeitsrichtung hinteren Nähte wird von dem Bildverarbeitungssystem 19 derart bestimmt, dass die Nähte zwischen den linken und rechten Bildbereichen 20A , 20B und dem hinteren Bildbereich 20C innerhalb der hinteren, linken und rechten Überlappungsbereiche 24A, 24B verlaufen. Das Bildverarbeitungssystem 19 legt den Verlauf der Nähte derart fest, dass die Nähte sich von dem hinteren, linken und rechten Eckpunkten des Maschinenrahmens 2 bis zu den Schnittpunkten der Umrisslinien der angrenzenden Bildbereiche 20A, 20C bzw. 20B, 20C erstrecken. Es ergeben sich eine hintere linke Naht 25A und eine hintere rechte 25B Naht, die in Fig. 5 gezeigt sind.

Für den vorderen Bildbereich 20D und die linken und rechten Bildbereiche 20A, 20B legt das Bildverarbeitungssystem 19 in Abhängigkeit von der Schwenkstellung der Transporteinrichtung 20 eine innerhalb des vorderen linken Überlappungsbereichs 23A verlaufende vordere linke Naht 25C und eine innerhalb des vorderen rechten Überlappungsbereichs 23B verlaufende vordere rechte Naht 25D fest.

Die vordere linke Naht 25C erstreckt sich zwischen den Schnittpunkten S₁ und S₂ der Umrisslinien des vorderen Bildbereichs 20D und des linken Bildbereichs 20A, und die vordere rechte Naht 25D erstreckt sich zwischen den Schnittpunkten S₃ und S₄ der Umrisslinien des vorderen Bildbereichs 20D und des rechten Bildbereichs 20B. Zwischen den beiden Nähte 25C und 25D liegt der Bildausschnitt 26C des vorderen Bildbereichs 20D, der mit den zugehörigen Bildausschnitten 26A und 26B des linken und rechten Bildbereichs 20A, 20B zusammengefügt wird. Hierzu werden die außen liegenden Abschnitte des vorderen Bildbereichs 20D entlang der Nähte 25C und 25D abgeschnitten und die innen liegenden Abschnitte des linken und rechten Bildbereiche 20A, 20B werden entlang der Nähte 25C und 25D abgeschnitten.

Die Lage der Anfangs- und Endpunkte der Nähte werden in dem X/Y-Koordinatensystem durch Koordinaten der Anfangs- und Endpunkte der Nähte festgelegt.

Das Bildverarbeitungssystem 19 erzeugt ein Gesamtbild 27 in der Vogelperspektive durch Zusammenfügen sämtlicher Bildausschnitte. Es zeigt sich, dass das Gesamtbild 27 einen auf der linken Längsseite des Maschinenrahmens 2 liegenden Abschnitt 27A und einen auf der rechten Längsseite des Maschinenrahmens 2 liegenden Abschnitt 27B umfasst. Darüber hinaus umfasst das Gesamtbild 27 einen unterhalb des Maschinenrahmens 2 liegenden Abschnitt 27C und einen vor dem Maschinenrahmen 2 liegenden Abschnitt 20D und einen hinter dem Maschinenrahmen 2 liegenden Abschnitt 20E.

Die Nähte für den vorderen Bildbereich 20D und die linken und rechten Bildbereiche 20A, 20B können auch derart festgelegt werden, dass einzelne oder sämtliche Nähte nicht innerhalb, sondern entlang der Umrisslinien oder Überlappungsbereiche verlaufen. Beispielsweise kann anstelle der linken vorderen Naht 25C innerhalb des Überlappungsbereichs 25C eine zwischen den Schnittpunkten S₁ und S₂ entlang der äußeren Umrisslinie des vorderen Bildbereichs 20D verlaufende Naht 25C'festgelegt werden. Anstelle der rechten vorderen Naht 25D innerhalb des Überlappungsbereichs 25D kann beispielsweise eine zwischen den Schnittpunkten S₃ und S₄ entlang der äußeren Umrisslinie des rechten Bildbereichs 20B verlaufende Naht 25D' festgelegt werden. Es ist auch möglich die Nähte für den hinteren Bildbereich und die linken und rechten Bildbereiche unter Berücksichtigung von anderen Kriterien festzulegen.

Die Figuren 8 und 9 zeigen eine alternative Ausführungsform, die sich von dem unter Bezugnahme auf die Figuren 4 und 5 beschriebenen Ausführungsbeispiel dadurch unterscheidet, dass das Kamerasystem 18 über zwei vordere Kameras 18D' und 18D" verfügt, die an der Transporteinrichtung 10 angeordnet sind. Die einander entsprechenden Teile sind daher mit den gleichen Bezugszeichen versehen. Die linke vordere Kamera 18D' ist an der Unterseite der linken Längsseite und die rechte vordere Kamera 18D" an der Unterseite der rechten Längsseite des Auslegers 11 derart befestigt, dass die Blickrichtung der linken Kamera 18D' in Richtung der linken Seite und die Blickrichtung der rechten Kamera 18D" in Richtung der rechten Seite des Maschinenrahmens 2 gerichtet ist, wenn die Längsachse der Transporteinrichtung 10 auf der Längsachse des Maschinenrahmens 2 liegt (Fig. 8). Beide Kameras 18D', 18D" sind in einem Abschnitt des Auslegers 11 befestigt, der im mittleren Drittel des Auslegers liegt. Die Bildbereiche 20D' und 20D" der vorderen linken und rechten Kameras 18D', 18D" überlappen sich in einem vorderen mittleren Überlappungsbereich 28. Wie bei dem Ausführungsbeispiel mit nur einer Kamera legt das Bildverarbeitungssystem 19 die Umrisslinien des vorderen linken Überlappungsbereichs 23A, des vorderen rechten Überlappungsbereichs 23B, des hinteren linken Überlappungsbereichs 24A und des hinteren rechten Überlappungsbereichs 24B fest. Darüber hinaus legt Bildverarbeitungssystem 19 die Umrisslinien des vorderen mittleren Überlappungsbereichs 28 fest. Daraufhin werden wie bei dem Ausführungsbeispiel mit nur einer Kamera die hinteren, linken und rechten Nähte 24A, 24B festgelegt. Die Nähte für die vorderen Bildbereiche 20D' und 20D" er beiden Kameras 18D', 18D" und die linken und rechten Bildbereiche 20A, 20B werden nach denselben Kriterien derart festgelegt, dass sich die einzelnen Bildbereich zu einem lückenlosen Gesamtbild zusammenfügen lassen.

Das Bildverarbeitungssystem 19 kann den Verlauf der Nähte und somit Lage und Größe der Bildausschnitte, die zu dem Gesamtbild zusammengefügt werden, derart festlegen, dass ein möglichst großer Bereich der Umgebung mit sämtlichen Kameras lückenlos erfasst wird. Beispielsweise kann die Sicht nach vorne auf Kosten der Sicht nach hinten erweitert werden oder umgekehrt. Es kann aber auch die Sicht zur linken Seite auf Kosten der Sicht zur rechten Seite erweitert werden oder umgekehrt.

Das Gesamtbild kann dann auf dem Display 9 der Anzeigeeinheit 8 in der vollen Größe angezeigt werden. Es ist aber auch möglich, nur einen Ausschnitt des Gesamtbildes, beispielsweise einen rechteckförmiger Bildausschnitt anzuzeigen.

## Patentansprüche

1. Selbstfahrende Baumaschine mit
einem Maschinenrahmen (2), der von einem Fahrwerk (1) getragen wird, das vordere und hintere Laufwerke (1 1A,B; 12A,B) aufweist,
einer am Maschinenrahmen (2) angeordneten Arbeitseinrichtung (3) zum Abtragen von Bodenmaterial,
einer in Arbeitsrichtung (A) sich nach vorne oder nach hinten über den Maschinenrahmen (2) hinaus erstreckenden Transporteinrichtung (10) zum Fördern von abgetragenem Material und
einer Bildanzeigeeinrichtung (17) zur Anzeige eines Bildes der Umgebung der Baumaschine,
wobei
die Bildanzeigeeinrichtung (17) als eine Bildanzeigeeinrichtung zur Anzeige eines Bildes der Umgebung der Baumaschine ausgebildet ist, die ein Kamerasystem (18) mit mehreren Kameras (18A, 18B, 18C, 18D) zur Aufnahme von einzelnen sich überlappenden Bildbereichen (20A, 20B, 20C, 20D) der Umgebung der Baumaschine aufweist, wobei das Kamerasystem (18)
mindestens eine an der Transporteinrichtung (10) angeordnete Kamera (18D; 18D', 18D") und
mindestens eine an dem Maschinenrahmen (2) angeordnete Kamera (18A, 18B, 18C) aufweist, die derart an dem Maschinenrahmen (2) angeordnet ist, dass die Blickrichtung der Kamera im Wesentlichen von dem Maschinenrahmen (2) weg gerichtet ist,
**dadurch gekennzeichnet, dass**
die Bildanzeigeeinrichtung (17) als eine Bildanzeigeeinrichtung zur Anzeige eines Bildes der Umgebung der Baumaschine in der Vogelperspektive ausgebildet ist, wobei ein Bildverarbeitungssystem (19) vorgesehen ist, das derart konfiguriert ist, dass Bildausschnitte der einzelnen Bildbereiche (20A, 20B, 20C, 20D) zu einem Gesamtbild (27) in der Vogelperspektive zusammengefügt werden, und
die mindestens eine an der Transporteinrichtung (10) angeordnete Kamera (18D; 18D', 18D") des Kamerasystems (18) derart an der Transporteinrichtung (10) angeordnet ist, dass die Blickrichtung der Kamera im Wesentlichen in Richtung des Maschinenrahmens (2) gerichtet ist.

2. Selbstfahrende Baumaschine nach Anspruch 1, **dadurch gekennzeichnet, dass** die mindestens eine an der Transporteinrichtung (10) angeordnete Kamera (18D; 18D', 18D") derart an der Transporteinrichtung (10) angeordnet ist, dass ein Teil des von der mindestens einen Kamera aufgenommenen Bildbereichs unterhalb des Maschinenrahmens, vorzugsweise im Bereich mindestens eines vorderen Laufwerks (11A,B), liegt.

3. Selbstfahrende Baumaschine nach Anspruch 1 oder 2, **dadurch gekennzeichnet, dass** die Transporteinrichtung (10) einen Ausleger (11) aufweist, an dem ein Förderband (12) angeordnet ist, und dass die mindestens eine an der Transporteinrichtung (10) angeordnete Kamera (18D; 18D', 18D") an der Unterseite des Auslegers (11) angeordnet ist.

4. Selbstfahrende Baumaschine nach Anspruch 3, **dadurch gekennzeichnet, dass** das Kamerasystem (18) eine an der Unterseite des Auslegers (11) der Transporteinrichtung (10) angeordnete Kamera (18D) aufweist, und dass die Kameraachse im Wesentlichen in Längsrichtung des langgestreckten Auslegers verläuft.

5. Selbstfahrende Baumaschine nach Anspruch 3, **dadurch gekennzeichnet, dass** das Kamerasystem (18) zwei an der Unterseite des Auslegers (11) der Transporteinrichtung (10) angeordnete Kameras (18D', 18D") aufweist, und dass die Kameraachsen schräg zur Längsrichtung des Auslegers (12) verlaufen, wobei die Blickrichtung der einen Kamera (18D') im Wesentlichen in Richtung der einen Seite des Maschinenrahmens (2) und die Blickrichtung der anderen Kamera (18D") im Wesentlichen in Richtung der anderen Seite des Maschinenrahmens (2) gerichtet ist, wenn die Längsachse der Transporteinrichtung (10) auf der Längsachse des Maschinenrahmens (2) liegt.

6. Selbstfahrende Baumaschine nach einem der Ansprüche 1 bis 5, **dadurch gekennzeichnet, dass** das Kamerasystem (18) zur Aufnahme eines linken und rechten Bildbereichs (20A, 20B) eine linke Kamera (18A) an der in Arbeitsrichtung (A) linken Längsseite des Maschinenrahmens (2) und eine rechte Kamera (18B) an der in Arbeitsrichtung (A) rechten Längsseite des Maschinenrahmens (2) und zur Aufnahme eines hinteren Bildbereichs (20C) eine in Arbeitsrichtung (A) hintere Kamera (18C) aufweist.

7. Selbstfahrende Baumaschine nach Anspruch 6, **dadurch gekennzeichnet, dass** die linke Kamera (18A) und die rechte Kamera (18B) und die mindestens eine an der Transporteinrichtung (10) angeordnete Kamera (18D; 18D', 18D") derart an dem Maschinenrahmen (2) bzw. der Transporteinrichtung (10) angeordnet sind, dass sich der Bildbereich (20A) der linken Kamera (18A) und der Bildbereich (20B) der rechten Kamera (18B) mit dem mindestens einen Bildbereich (20D; 20D', 20D") der mindestens einen an der Transporteinrichtung (10) angeordneten Kamera (18D; 18D', 18D") in einem Bereich auf der linken und rechten Längsseite des Maschinenrahmens (2) überlappen.

8. Selbstfahrende Baumaschine nach Anspruch 7, **dadurch gekennzeichnet, dass** das Bildverarbeitungssystem (19) derart konfiguriert ist, dass in dem Bildbereich (20A) der linken Kamera (18A), dem Bildbereich (20B) der rechten Kamera (18B) und dem mindestens einen Bildbereich (20D; 20D', 20D") der mindestens einen an der Transporteinrichtung (10) angeordneten Kamera (18A, 18B, 18C) Bildausschnitte festgelegt werden, die zu einem Gesamtbild (27) in der Vogelperspektive zusammengefügt werden, das einen auf der linken und rechten Längsseite des Maschinenrahmens liegenden Abschnitt (27A, 27B), einen unterhalb des Maschinenrahmens (2) liegenden Abschnitt (27E) und einen vor dem Maschinenrahmen liegenden Abschnitt (27D) umfasst.

9. Selbstfahrende Baumaschine nach einem der Ansprüche 1 bis 8, **dadurch gekennzeichnet, dass** die Transporteinrichtung (10) um eine senkrecht auf der Ebene des Maschinenrahmens (2) verlaufende Achse schwenkbar an dem Maschinenrahmen angeordnet ist, und eine die Schwenkstellung der Transporteinrichtung erfassende Lageerfassungs-Einrichtung (15) vorgesehen ist, wobei das Bildverarbeitungssystem (19) derart konfiguriert ist, dass der Verlauf der Nähte (25A, 25B, 25C, 25D) zwischen den Bildausschnitten in Abhängigkeit von der Schwenkstellung der Transporteinrichtung (10) festgelegt wird.

10. Selbstfahrende Baumaschine nach Anspruch 9, **dadurch gekennzeichnet, dass** die Lageerfassungs-Einrichtung (15) derart konfiguriert ist, dass die Schwenkstellung beschreibende Positions-Daten erzeugt werden und das Bildverarbeitungssystem (19) derart konfiguriert ist, dass auf der Basis der Positions-Daten der Verlauf der Nähte (20A, 20B, 20C, 20D) zwischen den Bildausschnitten derart festgelegt wird, dass die Nähte innerhalb der Überlappungsbereiche (24A, 24B, 23A, 23B) liegen.

11. Selbstfahrende Baumaschine nach Anspruch 10, **dadurch gekennzeichnet, dass** das Bildverarbeitungssystem (19) derart konfiguriert ist, dass auf der Basis der Positions-Daten für die Festlegung des Verlaufes der Nähte (25A, 25B, 25C, 25D) zwischen den Bildausschnitten die Umrisslinien der einzelnen Bildbereiche (20A, 20B, 20C, 20D) der Kameras (18A, 18B, 18C, 18D) bestimmt werden und auf der Basis der Umrisslinien die Überlappungsbereiche (24A, 24B, 23A, 23B) der Bildbereiche (20A, 20B, 20C, 20D) bestimmt werden.

12. Verfahren zur Anzeige eines Bildes der Umgebung einer selbstfahrenden Baumaschine, die aufweist
einen Maschinenrahmen (2), der von einem Fahrwerk (1) getragen wird, das vordere und hintere Laufwerke (11A,B; 12A,B) aufweist,
eine am Maschinenrahmen (2) angeordnete Arbeitseinrichtung (3) zum Abtragen von Bodenmaterial,
eine in Arbeitsrichtung (A) sich über den Maschinenrahmen (2) hinaus erstreckende Transporteinrichtung (10) zum Fördern von abgetragenem Material,
wobei
mit mehreren Kameras (18A, 18B, 18C, 18D) einzelne sich überlappende Bildbereiche (20A, 20B, 20C, 20D) der Umgebung der Baumaschine aufgenommen werden,
mindestens eine Kamera (18D; 18D', 18D") an der Transporteinrichtung (10) angeordnet wird, und mindestens eine Kamera (18A, 18B, 18C) an dem Maschinenrahmen (2) angeordnet wird, wobei die Blickrichtung der an dem Maschinenrahmen (2) angeordneten Kamera von dem Maschinenrahmen (2) weg gerichtet wird,
**dadurch gekennzeichnet, dass**
Bildausschnitte der einzelnen Bildbereiche (20A, 20B, 20C, 20D) zu einem Gesamtbild (27) in der Vogelperspektive zusammengefügt werden, wobei die Blickrichtung der an der Transporteinrichtung (10) angeordneten Kamera in Richtung des Maschinenrahmens (2) gerichtet wird.

13. Verfahren nach Anspruch 12, **dadurch gekennzeichnet, dass** mindestens eine Kamera (18D; 18D', 18D") an der Transporteinrichtung (10) derart angeordnet wird, dass ein Teil des von der mindestens einen Kamera (18D; 18D', 18D") aufgenommenen Bildbereichs unterhalb des Maschinenrahmens (2), vorzugsweise im Bereich mindestens eines vorderen Laufwerks (11A, B), liegt.

14. Verfahren nach Anspruch 13, **dadurch gekennzeichnet, dass** eine Kamera (18D') derart an der Unterseite der Transporteinrichtung (10) angeordnet wird, dass die Kameraachse in Längsrichtung der Transporteinrichtung (10) verläuft.

15. Verfahren nach Anspruch 13, **dadurch gekennzeichnet, dass** zwei Kameras (18D', 18D") derart an der der Unterseite der Transporteinrichtung (10) angeordnet werden, dass die Kameraachsen schräg zur Längsrichtung der Transporteinrichtung (10) verlaufen, wobei die Blickrichtung der einen Kamera (18D') in Richtung der einen Seite des Maschinenrahmens (2) und die Blickrichtung der anderen Kamera (18D") in Richtung der anderen Seite des Maschinenrahmens (2) gerichtet wird.

16. Verfahren nach einem der Ansprüche 12 bis 15, **dadurch gekennzeichnet, dass** die Transporteinrichtung um eine senkrecht auf der Ebene des Maschinenrahmens (2) verlaufende Achse schwenkbar an dem Maschinenrahmen angeordnet ist, wobei die Schwenkstellung der Transporteinrichtung (10) erfasst wird und der Verlauf der Nähte (25A, 25B, 25C, 25D) zwischen den Bildausschnitten (20A, 20B, 20C, 20D) in Abhängigkeit von der Schwenkstellung der Transporteinrichtung (2) festgelegt wird.

17. Verfahren nach Anspruch 16, **dadurch gekennzeichnet, dass** der Verlauf der Nähte (25A, 25B, 25C, 25D) zwischen den Bildausschnitten in Abhängigkeit von der Schwenkstellung der Transporteinrichtung (10) derart festgelegt wird, dass die Nähte (25A, 25B, 25C, 25D) innerhalb der Überlappungsbereiche (24A, 24B, 23A, 23B) liegen.

18. Verfahren nach Anspruch 17, **dadurch gekennzeichnet, dass** für die Festlegung des Verlaufes der Nähte (25A, 25B, 25C, 25D) zwischen den Bildausschnitten die Umrisslinien der einzelnen Bildbereiche (20A, 20B, 20C, 20D, 20D', 20D") der Kameras (18A, 18B, 18C, 18D; 18D', 18D") bestimmt werden und auf der Basis der Umrisslinien die Überlappungsbereiche (24A, 24B, 23A, 23B) der Bildbereiche (20A, 20B, 20C, 20D) bestimmt werden.

## Claims

1. Self-propelled construction machine comprising
a machine frame (2), which is carried by a chassis (1), which has front and rear running gears (11A,B; 12A,B),
a working device (3) arranged on the machine frame (2) for removing ground material,
a transport device (10) extending forward or rearward in the working direction (A) beyond the machine frame (2) to convey removed material, and
an image display device (17) for displaying an image of the surroundings of the construction machine,
wherein
the image display device (17) is configured as an image display device for displaying an image of the surroundings of the construction machine, which image display device has a camera system (18) with a plurality of cameras (18A, 18B, 18C, 18D) for recording individual overlapping image regions (20A, 20B, 20C, 20D) of the surroundings of the construction machine, wherein the camera system (18) comprises
at least one camera (18D; 18D', 18D") arranged on the transport device (10), and
at least one camera (18A, 18B, 18C) arranged on the machine frame (2), which is arranged on the machine frame (2) in such a way that the viewing direction of the camera is substantially directed away from the machine frame (2),
**characterized in that**
the image display device (17) is configured as an image display device for displaying a bird's eye view image of the surroundings of the construction machine, wherein an image processing system (19) is provided, which is configured in such a way that image details of the individual image regions (20A, 20B, 20C, 20D) are joined together to form a total image (27) from a bird's eye view, and
the at least one camera (18D; 18D', 18D") of the camera system (18) arranged on the transport device (10) is arranged on transport device (10) in such a way that the viewing direction of the camera is directed substantially in the direction of the machine frame (2)

2. Self-propelled construction machine according to claim 1, **characterised in that** the at least one camera (18D; 18D', 18D") arranged on the transport device (10) is arranged on the transport device (10) in such a way that a part of the image region recorded by the at least one camera is located below the machine frame, preferably in the region of at least one front running gear (11A,B).

3. Self-propelled construction machine according to either claim 1 or claim 2, **characterised in that** the transport device (10) has a jib (11), on which a conveyor belt (12) is arranged, and **in that** the at least one camera (18D; 18D', 18D") arranged on the transport device (10) is arranged on the lower side of the jib (11).

4. Self-propelled construction machine according to claim 3, **characterised in that** the camera system (18) has a camera (18D) arranged on the lower side of the jib (11) of the transport device (10), and **in that** the camera axis runs substantially in the longitudinal direction of the elongate jib.

5. Self-propelled construction machine according to claim 3, **characterised in that** the camera system (18) has two cameras (18D', 18D") arranged on the lower side of the jib (11) of the transport device (10), and **in that** the camera axes run in a sloping manner with respect to the longitudinal direction of the jib (12), wherein the viewing direction of the one camera (18D') is substantially directed in the direction of the one side of the machine frame (2) and the viewing direction of the other camera (18D") is directed substantially in the direction of the other side of the machine frame (2) when the longitudinal axis of the transport device (10) is located on the longitudinal axis of the machine frame (2).

6. Self-propelled construction machine according to any of claims 1 to 5, **characterised in that** the camera system (18), to record a left-hand and right-hand image region (20A, 20B), has a left-hand camera (18A) on the left-hand longitudinal side of the machine frame (2) in the working direction (A) and a right-hand camera (18B) on the right-hand longitudinal side of the machine frame (2) in the working direction (A) and has a rear camera (18C) in the working direction (A) to record a rear image region (20C).

7. Self-propelled construction machine according to claim 6, **characterised in that** the left-hand camera (18A) and the right-hand camera (18B) and the at least one camera (18D; 18D', 18D") arranged on the transport device (10) are arranged on the machine frame (2) or the transport device (10) in such a way that the image region (20A) of the left-hand camera (18A) and the image region (20B) of the right-hand camera (18B) overlap with the at least one image region (20D; 20D', 20D") of the at least one camera (18D; 18D', 18D") arranged on the transport device (10) in a region on the left-hand and right-hand longitudinal side of the machine frame (2).

8. Self-propelled construction machine according to claim 7, **characterised in that** the image processing system (19) is configured in such a way that in the image region (20A) of the left-hand camera (18A), the image region (20B) of the right-hand camera (18B) and the at least one image region (20D; 20D', 20D") of the at least one camera (18A, 18B, 18C) arranged on the transport device (10), image details are determined, which are joined together to form a total image (27) from a bird's eye view, which comprises a portion (27A, 27B) located on the left-hand and right-hand longitudinal side of the machine frame, a portion (27E) located below the machine frame (2) and a portion (27D) located in front of the machine frame.

9. Self-propelled construction machine according to any of claims 1 to 8, **characterised in that** the transport device (10) is pivotably arranged on the machine frame about an axis running perpendicular to the plane of the machine frame (2), and a position detection device (15) detecting the pivoting position of the transport device is provided, the image processing system (19) being configured in such a way that the course of the stitching (25A, 25B, 25C, 25D) between the image details is determined depending on the pivoting position of the transport device (10).

10. Self-propelled construction machine according to claim 9, **characterised in that** the position detection device (15) is configured in such a way that position data describing the pivoting position are produced and the image processing system (19) is configured in such a way that the course of the stitching (20A, 20B, 20C, 20D) between the image details is determined based on the position data in such a way that the stitching is located within the overlapping regions (24A, 24B, 23A, 23B).

11. Self-propelled construction machine according to claim 10, **characterised in that** the image processing system (19) is configured in such a way that the contours of the individual image regions (20A, 20B, 20C, 20D) of the cameras (18A, 18B, 18C, 18D) are determined based on position data for determining the course of the stitching (25A, 25B, 25C, 25D) between the image details and the overlapping regions (24A, 24B, 23A, 23B) of the image regions (20A, 20B, 20C, 20D) are determined based on the contours.

12. Method for displaying an image of the surroundings of a self-propelled construction machine, which comprises
a machine frame (2), which is carried by a chassis (1), which has front and rear running gears (11A,B; 12A,B),
a working device (3) arranged on a machine frame (2) to remove ground material,
a transport device (10) extending beyond the machine frame (2) in the working direction (A) to convey removed material, wherein
individual overlapping image regions (20A, 20B, 20C, 20D) of the surroundings of the construction machine are recorded using a plurality of cameras (18A, 18B, 18C, 18D),
at least one camera (18D; 18D', 18D") is arranged on the transport device (10), and at least one camera (18A, 18B, 18C) is arranged on the machine frame (2), and the viewing direction of the camera arranged on the machine frame (2) is directed away from the machine frame (2),
**characterized in that** image details of the individual image regions (20A, 20B, 20C, 20D) are joined together to form a total image (27) from a bird's eye view, wherein the viewing direction of the camera arranged on the transport device (10) is directed in the direction of the machine frame (2),.

13. Method according to claim 12, **characterised in that** at least one camera (18D; 18D', 18D") is arranged on the transport device (10) in such a way that a part of the image region recorded by the at least one camera (18D; 18D', 18D") is located below the machine frame (2), preferably in the region of at least one front running gear (11A, B).

14. Method according to claim 13, **characterised in that** one camera (18D') is arranged on the lower side of the transport device (10) in such a way that the camera axis runs in the longitudinal direction of the transport device (10).

15. Method according to claim 13, **characterised in that** two cameras (18D', 18D") are arranged on the lower side of the transport device (10) in such a way that the camera axes run in a sloping manner with respect to the longitudinal direction of the transport device (10), the viewing direction of the one camera (18D') being directed in the direction of the one side of the machine frame (2) and the viewing direction of the other camera (18D") being directed in the direction of the other side of the machine frame (2).

16. Method according to any of claims 12 to 15, **characterised in that** the transport device is pivotably arranged on the machine frame about an axis running perpendicular to the plane of the machine frame (2), the pivoting position of the transport device (10) being detected and the course of the stitching (25A, 25B, 25C, 25D) between the image details (20A, 20B, 20C, 20D) being determined depending on the pivoting position of the transport device (2).

17. Method according to claim 16, **characterised in that** the course of the stitching (25A, 25B, 25C, 25D) between the image details is determined depending on the pivoting position of the transport device (10) in such a way that the stitching (25A, 25B, 25C, 25D) is located within the overlapping regions (24A, 24B, 23A, 23B).

18. Method according to claim 17, **characterised in that** to determine the course of the stitching (25A, 25B, 25C, 25D) between the image details, the contours of the individual image regions (20A, 20B, 20C, 20D, 20D', 20D") of the cameras (18A, 18B, 18C, 18D; 18D', 18D") are determined and the overlapping regions (24A, 24B, 23A, 23B) of the image regions (20A, 20B, 20C, 20D) are determined based on the contours.

## Revendications

1. Engin de chantier autopropulsé avec
un châssis d'engin (2) qui est porté par un mécanisme de déplacement (1) qui présente des mécanismes de roulement avant et arrière (11A, B ; 12A, B),
un dispositif de travail (3) agencé au niveau du châssis d'engin (2) pour l'enlèvement de matériau de sol,
un dispositif de transport (10) s'étendant dans le sens de travail (A) vers l'avant ou vers l'arrière au-delà du châssis d'engin (2) pour le transport de matériau enlevé et
un dispositif d'affichage d'image (17) pour l'affichage d'une image de l'environnement de l'engin de chantier,
dans lequel
le dispositif d'affichage d'image (17) est réalisé en tant que dispositif d'affichage d'image pour l'affichage d'une image de l'environnement de l'engin de chantier qui présente un système de caméra (18) avec plusieurs caméras (18A, 18B, 18C, 18D) pour la prise de zones d'image (20A, 20B, 20C, 20D) individuelles se chevauchant de l'environnement de l'engin de chantier, dans lequel le système de caméra (18)
présente au moins une caméra (18D ; 18D', 18D") agencée au niveau du dispositif de transport (10) et
au moins une caméra (18A, 18B, 18C) agencée au niveau du châssis d'engin (2) qui est agencée au niveau du châssis d'engin (2) de telle manière que la direction de vision de la caméra soit dirigée sensiblement loin du châssis d'engin (2), **caractérisé en ce que**
le dispositif d'affichage d'image (17) est réalisé en tant que dispositif d'affichage d'image pour l'affichage d'une image de l'environnement de l'engin de chantier dans la perspective à vol d'oiseau, dans lequel un système de traitement d'image (19) est prévu, lequel est configuré de telle manière que des cadrages des zones d'image (20A, 20B, 20C, 20D) individuelles soient réunis pour former une image globale (27) dans la perspective à vol d'oiseau, et
l'au moins une caméra (18D ; 18D', 18D") agencée au niveau du dispositif de transport (10) du système de caméra (18) est agencée au niveau du dispositif de transport (10) de telle manière que la direction de vision de la caméra soit dirigée sensiblement en direction du châssis d'engin (2).

2. Engin de chantier autopropulsé selon la revendication 1, **caractérisé en ce que** l'au moins une caméra (18D ; 18D', 18D") agencée au niveau du dispositif de transport (10) est agencée au niveau du dispositif de transport (10) de telle manière qu'une partie de la zone d'image prise par l'au moins une caméra se trouve en dessous du châssis d'engin, de préférence dans la zone d'au moins un mécanisme de roulement (11A, B) avant.

3. Engin de chantier autopropulsé selon la revendication 1 ou 2, **caractérisé en ce que** le dispositif de transport (10) présente un bras (11) au niveau duquel une bande de transport (12) est agencée, et que l'au moins une caméra (18D ; 18D', 18D") agencée au niveau du dispositif de transport (10) est agencée au niveau du côté inférieur du bras (11).

4. Engin de chantier autopropulsé selon la revendication 3, **caractérisé en ce que** le système de caméra (18) présente une caméra (18D) agencée au niveau du côté inférieur du bras (11) du dispositif de transport (10), et que l'axe de caméra s'étend sensiblement dans le sens longitudinal du bras étiré en longueur.

5. Engin de chantier autopropulsé selon la revendication 3, **caractérisé en ce que** le système de caméra (18) présente deux caméras (18D', 18D") agencées au niveau du côté inférieur du bras (11) du dispositif de transport (10), et que les axes de caméra s'étendent en biais par rapport au sens longitudinal du bras (12), dans lequel la direction de vision de l'une caméra (18D') est dirigée sensiblement en direction d'un côté du châssis d'engin (2) et la direction de vision de l'autre caméra (18D") est dirigée sensiblement en direction de l'autre côté du châssis d'engin (2) lorsque l'axe longitudinal du dispositif de transport (10) se trouve sur l'axe longitudinal du châssis d'engin (2).

6. Engin de chantier autopropulsé selon l'une des revendications 1 à 5, **caractérisé en ce que** le système de caméra (18) présente pour la prise d'une zone d'image (20A, 20B) gauche et droite une caméra gauche (18A) sur le côté longitudinal gauche dans le sens de travail (A) du châssis d'engin (2) et une caméra droite (18B) sur le côté longitudinal droit dans le sens de travail (A) du châssis d'engin (2) et présente pour la prise d'une zone d'image arrière (20C) une caméra (18C) arrière dans le sens de travail (A).

7. Engin de chantier autopropulsé selon la revendication 6, **caractérisé en ce que** la caméra gauche (18A) et la caméra droite (18B) et l'au moins une caméra (18D ; 18D', 18D") agencée au niveau du dispositif de transport (10) sont agencées au niveau du châssis d'engin (2) ou du dispositif de transport (10) de telle manière que la zone d'image (20A) de la caméra gauche (18A) et la zone d'image (20B) de la caméra droite (18B) se chevauchent avec l'au moins une zone d'image (20D ; 20D', 20D") de l'au moins une caméra (18D ; 18D', 18D") agencée au niveau du dispositif de transport (10) dans une zone sur le côté longitudinal gauche et droit du châssis d'engin (2).

8. Engin de chantier autopropulsé selon la revendication 7, **caractérisé en ce que** le système de traitement d'image (19) est configuré de telle manière que dans la zone d'image (20A) de la caméra gauche (18A), la zone d'image (20B) de la caméra droite (18B) et l'au moins une zone d'image (20D ; 20D', 20D") de l'au moins une caméra (18A, 18B, 18C) agencée au niveau du dispositif de transport (10) des cadrages soient fixées, lesquelles sont réunies pour former une image globale (27) dans la perspective à vol d'oiseau qui comporte une section (27A, 27B) se trouvant sur le côté longitudinal gauche et droit du châssis d'engin, une section (27E) se trouvant en dessous du châssis d'engin (2) et une section (27D) se trouvant devant le châssis d'engin.

9. Engin de chantier autopropulsé selon l'une des revendications 1 à 8, **caractérisé en ce que** le dispositif de transport (10) est agencé de manière pivotante autour d'un axe s'étendant perpendiculairement sur le plan du châssis d'engin (2) au niveau du châssis d'engin, et un dispositif de détection de position (15) détectant la position de pivotement du dispositif de transport est prévu, dans lequel le système de traitement d'image (19) est configuré de telle manière que le tracé des joints (25A, 25B, 25C, 25D) entre les cadrages soit fixé en fonction de la position de pivotement du dispositif de transport (10).

10. Engin de chantier autopropulsé selon la revendication 9, **caractérisé en ce que** le dispositif de détection de position (15) est configuré de telle manière que des données de position décrivant la position de pivotement soient générées et le système de traitement d'image (19) est configuré de telle manière que sur la base des données de position le tracé des joints (20A, 20B, 20C, 20D) soit fixé entre les cadrages de telle manière que les joints se trouvent dans les zones de chevauchement (24A, 24B, 23A, 23B).

11. Engin de chantier autopropulsé selon la revendication 10, **caractérisé en ce que** le système de traitement d'image (19) est configuré de telle manière que sur la base des données de position pour la fixation du tracé des joints (25A, 25B, 25C, 25D) entre les cadrages les lignes de contour des zones d'image (20A, 20B, 20C, 20D) individuelles des caméras (18A, 18B, 18C, 18D) soient déterminés et sur la base des lignes de contour les zones de chevauchement (24A, 24B, 23A, 23B) des zones d'image (20A, 20B, 20C, 20D) soient déterminées.

12. Procédé d'affichage d'une image de l'environnement d'un engin de chantier autopropulsé qui présente
un châssis d'engin (2) qui est porté par un mécanisme de déplacement (1) qui présente des mécanismes de roulement avant et arrière (11A, B ; 12A, B),
un dispositif de travail (3) agencé au niveau du châssis d'engin (2) pour l'enlèvement de matériau de sol,
un dispositif de transport (10) s'étendant dans le sens de travail (A) au-delà du châssis d'engin (2) pour le transport de matériau enlevé,
dans lequel
des zones d'image (20A, 20B, 20C, 20D) individuelles se chevauchant de l'environnement de l'engin de chantier sont prises avec plusieurs caméras (18A, 18B, 18C, 18D),
au moins une caméra (18D ; 18D', 18D") est agencée au niveau du dispositif de transport (10), et au moins une caméra (18A, 18B, 18C) est agencée au niveau du châssis d'engin (2), dans lequel la direction de vision de la caméra agencée au niveau du châssis d'engin (2) est dirigée loin du châssis d'engin (2),
**caractérisé en ce que**
des cadrages des zones d'image (20A, 20B, 20C, 20D) individuelles sont réunis pour former une image globale (27) dans la perspective à vol d'oiseau, dans lequel la direction de vision de la caméra agencée au niveau du dispositif de transport (10) est dirigée en direction du châssis d'engin (2).

13. Procédé selon la revendication 12, **caractérisé en ce qu'**au moins une caméra (18D ; 18D', 18D") est agencée au niveau du dispositif de transport (10) de telle manière qu'une partie de la zone d'image prise par l'au moins une caméra (18D ; 18D', 18D") se trouve en dessous du châssis d'engin (2), de préférence dans la zone d'au moins un mécanisme de roulement (11A, B) avant.

14. Procédé selon la revendication 13, **caractérisé en ce qu'**une caméra (18D') est agencée au niveau du côté inférieur du dispositif de transport (10) de telle manière que l'axe de caméra s'étende dans le sens longitudinal du dispositif de transport (10).

15. Procédé selon la revendication 13, **caractérisé en ce que** deux caméras (18D', 18D") sont agencées sur le côté inférieur du dispositif de transport (10) de telle manière que les axes de caméra s'étendent en biais par rapport au sens longitudinal du dispositif de transport (10), dans lequel la direction de vision d'une caméra (18D') est dirigée en direction d'un côté du châssis d'engin (2) et la direction de vision de l'autre caméra (18D") est dirigée en direction de l'autre côté du châssis d'engin (2).

16. Procédé selon l'une des revendications 12 à 15, **caractérisé en ce que** le dispositif de transport est agencé de manière pivotante autour d'un axe s'étendant perpendiculairement sur le plan du châssis d'engin (2) au niveau du châssis d'engin, dans lequel la position de pivotement du dispositif de transport (10) est détectée et le tracé des joints (25A, 25B, 25C, 25D) entre les cadrages (20A, 20B, 20C, 20D) est fixé en fonction de la position de pivotement du dispositif de transport (2).

17. Procédé selon la revendication 16, **caractérisé en ce que** le tracé des joints (25A, 25B, 25C, 25D) entre les cadrages est fixé en fonction de la position de pivotement du dispositif de transport (10) de telle manière que les joints (25A, 25B, 25C, 25D) se trouvent dans les zones de chevauchement (24A, 24B, 23A, 23B).

18. Procédé selon la revendication 17, **caractérisé en ce que** pour la fixation du tracé des joints (25A, 25B, 25C, 25D) entre les cadrages les lignes de contour, des zones d'image (20A, 20B, 20C, 20D, 20D', 20D") individuelles des caméras (18A, 18B, 18C, 18D ; 18D', 18D") sont déterminées et sur la base des lignes de contour les zones de chevauchement (24A, 24B, 23A, 23B) des zones d'image (20A, 20B, 20C, 20D) sont déterminées.
